# EUROPÄISCHE PATENTANMELDUNG

(11) **EP 1 498 721 A1**
(43) Veröffentlichungstag der Anmeldung: **19.01.2005**
(21) Anmeldenummer: 03016023.8
(22) Anmeldetag: 15.07.2003
(51) Int. Cl.: G01N 21/53, G01N 21/47, B60Q 1/08, B60R 16/02

(54) **Vorrichtung zur Erkennung von Nebel, insbesondere für ein Fahrzeug**

(71) Anmelder: ELMOS Semiconductor AG, 44227 Dortmund (DE)
(72) Erfinder: Reime, Gerd, 75328 Schömberg (DE)
(74) Vertreter: Hilleringmann, Jochen, Dipl.-Ing.

(57) **Zusammenfassung**

Die Vorrichtung zur Erkennung von Nebel ist insbesondere bei einem Fahrzeug einsetzbar und ist versehen mit einer eine Vielzahl von in Arrayform angeordneten Pixeln aufweisenden Kamera (12), die einen Teil ihrer Umgebung, insbesondere den Bereich vor einem Fahrzeug, erfasst, und einer Bildauswerteeinheit (14) zur Auswertung eines von der Kamera (12) erfassten Bildes der Umgebung zwecks Detektion von Nebel. Bei dieser Vorrichtung ist ferner vorgesehen, dass die Bildauswerteeinheit (14) den Helligkeitswert jedes Pixels der Kamera (12) mit einem vorgebbaren Mindesthelligkeitswert vergleicht und ein Nebel anzeigendes Ausgangssignal ausgibt, wenn keines der Pixel einen Helligkeitswert aufweist, der kleiner als der Mindesthelligkeitswert ist.

## Beschreibung

Die Erfindung betrifft eine Vorrichtung zur Erkennung von Nebel und ist insbesondere einsetzbar in einem Fahrzeug.

Es ist grundsätzlich bekannt, die Außenbeleuchtung von Fahrzeugen in Abhängigkeit von den Umgebungsbedingungen ein- bzw. auszuschalten oder zu steuern. Beispielsweise ist in DE-A-101 64 193 beschrieben, die Nebelscheinwerfer und/oder die Nebelrückleuchte eines Fahrzeuges automatisch einzuschalten, wenn Nebel erkannt wird. Wie der Nebeldetektor konkret arbeitet, ist in dieser Schrift nicht beschrieben.

In DE-A-199 22 735 ist beschrieben, anhand der Transmission eines ausgesendeten Laserlichtstrahls zu erkennen, ob Nebel vorhanden ist oder nicht. Eine andere Art bekannter Nebellichterkennung basiert auf dem Gedanken, dass Nebel dann gegeben ist, wenn die Kontrastunterschiede in einem Digital-Kamerabild der Umgebung einen Minimalwert unterschreiten. Derartige Nebeldetektoren sind in EP-A-0 687 594, EP-A-0 879 158 und in DE-A-197 04 818 beschrieben.

Die Nebeldetektion anhand der Untersuchung von Kontrastunterschieden führt nicht immer zu zuverlässigen Ergebnissen. So kann beispielsweise starkes Umgebungslicht (Sonneneinstrahlung oder Mondschein) dazu führen, dass beim Durchfahren eines Nebelgebiets der Kontrast immer noch oberhalb einer vorgegebenen Mindestschwelle liegt.

Eine Aufgabe der Erfindung ist es, eine Vorrichtung zur Erkennung von Nebel vorzuschlagen, die zu zuverlässigen und den tatsächlichen Verhältnissen entsprechenden Ergebnissen führt.

Zur Lösung dieser Aufgabe wird mit der Erfindung eine Vorrichtung zur Erkennung von Nebel, insbesondere für ein Fahrzeug, vorgeschlagen, die versehen ist mit
- einer eine Vielzahl von in Arrayform angeordneten Pixeln aufweisenden Kamera, die einen Teil ihrer Umgebung, insbesondere den Bereich vor einem Fahrzeug, erfasst, und
- einer Bildauswerteeinheit zur Auswertung eines von der Kamera erfassten Bildes der Umgebung zwecks Detektion von Nebel.

Bei dieser Vorrichtung ist erfindungsgemäß vorgesehen, dass die Bildauswerteeinheit den Helligkeitswert jedes Pixels der Kamera mit einem vorgebbaren Mindesthelligkeitswert vergleicht und ein Nebel anzeigendes Ausgangssignal ausgibt, wenn keines der Pixel einen Helligkeitswert aufweist, der kleiner als der Mindesthelligkeitswert ist.

Nach der Erfindung wird die Umgebung mit Hilfe einer Kamera erfasst, die eine Vielzahl von in Arrayform angeordneten Pixeln aufweist. Die Pixel können in einer Zeile (Linear-Array) oder als 2D-Array angeordnet sein. Über eine Bildauswerteeinheit wird anschließend der Helligkeitswert jedes Pixels des aufgenommenen Kamerabildes ausgewertet. Die einzelnen Helligkeitswerte werden mit einem Mindesthelligkeitswert verglichen, der fest oder variabel vorgebbar ist. Weist keines der Pixel einen Helligkeitswert auf, der kleiner als der Mindesthelligkeitswert ist, so wird ein Nebel anzeigendes Ausgangssignal von der Bildauswerteeinheit ausgegeben. Umgekehrt gilt also, dass kein Nebel angezeigt wird, wenn mindestens ein Pixel einen Helligkeitswert aufweist, der kleiner als der Mindesthelligkeitswert ist.

Mit anderen Worten liegt der Erfindung die Erkenntnis zu Grunde, dass bei klaren Sichtverhältnissen das Videosignal einer Kamera Schwarzanteile, also Werte annimmt, die eine geringe Helligkeit repräsentieren. Dies gilt insbesondere in dem Fall, in dem zur Nebelerkennung das Bild einer Kamera herangezogen wird, die den Bereich der Fahrbahn und Umgebung vor dem Fahrzeug aufnimmt. Derartige Kameras werden unter anderem zur (halbautomatischen) Steuerung von Fahrzeugen eingesetzt. Aber auch eine Fahrzeugkamera, die den rückwärtigen Bereich eines Fahrzeuges erfasst, kann erfindungsgemäß für die Nebeldetektion verwendet werden.

In beiden Fällen werden pro Kamerabild einige der Pixel Schwarzwerte, d.h. recht geringe Helligkeitswerte messen, wenn klare Sichtverhältnisse vorliegen.

Die Situation ist anders zu bewerten, wenn eine Nebelwetterlage gegeben ist. Dann nämlich "verschwinden" die Bereiche geringer Helligkeit (d.h. Schwarzanteile) in einem Kamerabild. Wird also die Helligkeit eines Kamerabildes, d.h. der Helligkeitswerts jedes Pixels des Kamerabildes daraufhin untersucht, ob er ober- oder unterhalb eines Mindesthelligkeitswerts liegt, so kann Nebel detektiert werden. Sobald mindestens ein Pixel-Helligkeitswert unterhalb des Mindesthelligkeitswerts liegt, kann nicht mehr davon ausgegangen werden, dass Nebel vorliegt.

Von Vorteil ist es, den Mindesthelligkeitswert in Abhängigkeit von der Intensität des Umgebungslichts vorzugeben. Hierzu wird über eine Einheit die Intensität des Umgebungslichts detektiert. Bei dieser Einheit kann es sich beispielsweise um eine Fotodiode handeln. Mehrere derartiger Fotodioden können zur Intensitätsdetektion des Umgebungslichts eingesetzt werden. Im Falle des Einsatzes der erfindungsgemäßen Vorrichtung in einem Auto kann die Intensität des Umgebungslichts beispielsweise durch den Sonnensensor einer Klimaanlage ermittelt werden.

Je höher die Intensität des Umgebungslichts ist, desto höher muss auch der Mindesthelligkeitswert eingestellt werden.

Als Alternative zur Verwendung einer Fotodiode zur Detektion der Intensität des Umgebungslichts ist es auch möglich, die Umgebungslichtintensität anhand der Helligkeitswerte der Pixel des Kamerabilds zu ermitteln. Beispielsweise kann hier vorgesehen sein, als Intensität des Umgebungslichts den höchsten Helligkeitswert eines Pixels des Kamerabildes anzunehmen und diesen Wert für eine vorgebbare Zeitspanne zu speichern. Nach Ablauf dieser Zeitspanne wird dann wieder der im dann anstehenden Kamerabild höchste Helligkeitswert als Umgebungslichtintensität angenommen. Alternativ zu dieser Vorgehensweise ist es auch möglich, den gespeicherten Wert allmählich zu verringern und in dem Augenblick zu überschreiben, in dem der größte Helligkeitswert eines Kamerabildpixels oder der Durchschnittshelligkeitswert sämtlicher Pixel größer ist als der gespeicherte Wert. Hierbei handelt es sich dann um eine Art Spitzenwertspeicherung.

Die Erfindung wird nachfolgend anhand der Zeichnung näher erläutert. Hierbei zeigen im einzelnen:
- Fig. 1: schematisch in Seitenansicht ein Fahrzeug mit Nebeldetektion durch eine die Fahrbahn und deren Umgebung erfassende Kamera,
- Fig. 2: eine Darstellung eines Kamerabildes bei klarer Sicht und
- Fig. 3: die Darstellung des Kamerabildes gemäß Fig. 2 im Falle einer Nebelwetterlage.

Die Erfindung wird nachfolgend anhand ihrer Anwendung zur Einschaltung der vorderen Nebelleuchten bzw. der hinteren Nebellichtleuchte erläutert.

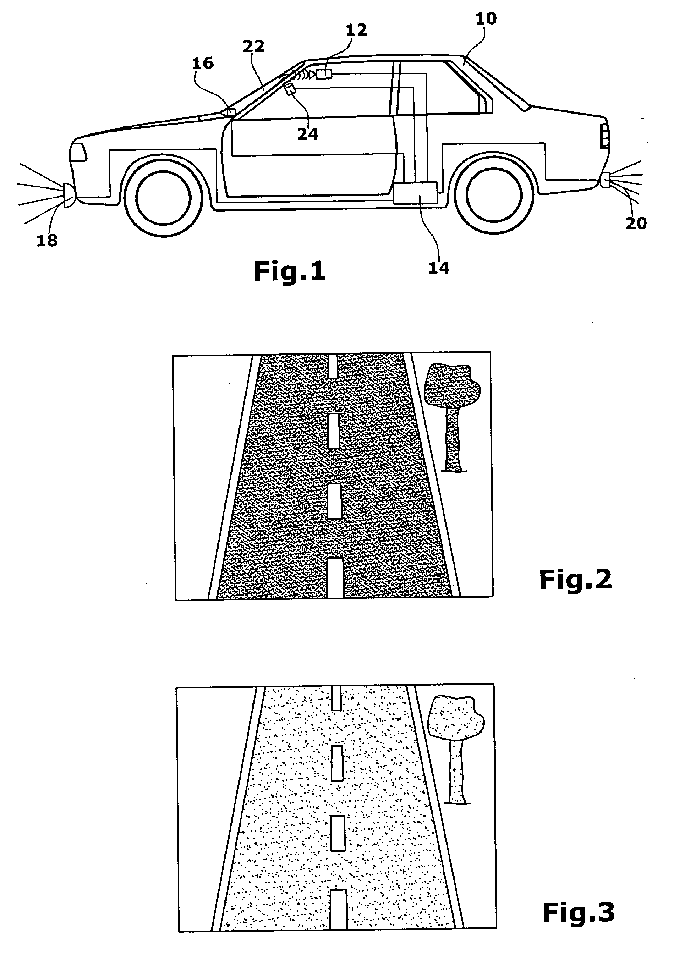

Gemäß Fig. 1 ist in einem Fahrzeug 10 eine beispielsweise digitale Kamera 12 angeordnet, die den Bereich in Fahrtrichtung vor dem Fahrzeug 10 erfasst. Diese Kamera 12 befindet sich beispielsweise im Innenrückspiegelgehäuse. Ein Beispiel für ein von der Kamera erfasstes Bild der Fahrbahn mit Umgebung ist für verschiedene Wettersituationen in den Fign. 2 und 3 gezeigt.

Ein von der Kamera 12 aufgenommenes Bild wird einer Bildverarbeitungseinheit 14 zugeführt, in der die Helligkeitswerte der Pixel der Kamera 12 ausgelesen werden. Bei der Kamera 12 handelt es sich beispielsweise um eine CCDoder CMOS-Kamera mit einem 2D-Array von einzelnen Pixeln.

Die Grundzüge der erfindungsgemäßen Detektion von Nebel sind darin zu sehen, dass eine die Umgebung erfassende Kamera bei klarer Sicht unter anderem auch Helligkeitswerte liefert, die im Regelfall schwarze Bildpunkte repräsentieren, also eine relativ geringe Helligkeitsamplitude aufweisen. Mit anderen Worten kann also aus dem Umstand, dass mindestens ein Pixel der Kamera einen Helligkeitswert liefert, der unterhalb eines Mindesthelligkeitswerts liegt, geschlossen werden, dass kein Nebel gegeben ist. Im Fall von Nebel dagegen reduziert sich der Schwarzanteil des Videosignals der Kamera. Mit anderen Worten kann aus dem Umstand, dass kein Pixel der Kamera einen Helligkeitswert erfasst, der kleiner als der Mindesthelligkeitswert ist, geschlossen werden, dass eine Nebelwettersituation gegeben ist.

Die Mindesthelligkeitswertschwelle sollte in Abhängigkeit von der Intensität des Umgebungslichts ermittelt werden. Hierzu bedient man sich eines Fotodetektors, der die Intensität des Umgebungslichts erfasst. Als Fotodetektor fungiert in diesem Ausführungsbeispiel ein Sonnensensor 16, wie er bei Fahrzeugen mit Klimaautomatik im Regelfall vorhanden ist.

Die oben beschriebenen theoretischen Überlegungen für die Nebelerkennung sind graphisch in den Fign. 2 und 3 wiedergegeben. Die in Fig. 2 (Aufnahme bei klarer Sicht) deutlich schwarz bzw. stark dunkel wiedergegebenen Bereiche (Fahrbahn und Baum) wirken in Fig. 3 (Nebelsituation) deutlich weniger dunkel. Insgesamt erscheint das "Nebelbild" gemäß Fig. 3 eher grau. Mit Hilfe des Vergleichs der von den Pixeln der Kamera gelieferten Helligkeitswerte kann also zuverlässig auf das Vorhandensein bzw. Nichtvorhandensein von Nebel geschlossen werden.

Wie in Fig. 1 gezeigt, befindet sich die Kamera 12 hinter einer transparenten Fläche (in diesem Fall der Windschutzscheibe 22). Sollte sich auf dieser Fläche im Erfassungsbereich der Kamera 12 ein Schmutzfleck befinden, so könnte dieser bei Nebel einen Pixelhelligkeitswert unterhalb des Mindesthelligkeitsbereichs generieren, was zu einer fehlerhaften Detektion führt. Hier kann Abhilfe dadurch geschaffen werden, dass der Kamera-Erfassungsbereich der transparenten Fläche mit für die Kamera erfassbarer Strahlung einer Lichtquelle 24, z.B. IR-Strahlung oder Strahlung nahe dem IR-Spektrum, "belichtet" wird (kontinuierlich oder getaktet). Damit wird der Schmutzfleck "aufgehellt" und kann die Nebeldetektion nicht mehr negativ beeinträchtigen.

Im Falle der Detektion eines Pixels eines Kamerabildes, dessen Helligkeitswert oberhalb des Mindesthelligkeitswerts liegt, wird also auf Nebel erkannt. Es ist nun applikationsabhängig, wann die vorderen Nebelscheinwerfer 18 bzw. die Nebelschlussleuchte 20 eingeschaltet werden. Eine Möglichkeit besteht darin, diese Leuchten erst dann einzuschalten, wenn für mehrere aufeinanderfolgende Bilder oder für mehrere Bilder innerhalb eines vorgebbaren Zeitrahmens auf Nebel erkannt worden ist. Entsprechend sollte man auch verfahren, um bei Erkennung, dass kein Nebel mehr gegeben ist, die Nebelscheinwerfer 18 bzw. die Nebelschlussleuchte 20 auszuschalten.

## Patentansprüche

1. Vorrichtung zur Erkennung von Nebel, insbesondere für ein Fahrzeug, mit
- einer eine Vielzahl von in Arrayform angeordneten Pixeln aufweisenden Kamera (12), die einen Teil ihrer Umgebung, insbesondere den Bereich vor einem Fahrzeug, erfasst, und
- einer Bildauswerteeinheit (14) zur Auswertung eines von der Kamera (12) erfassten Bildes der Umgebung zwecks Detektion von Nebel,
**dadurch gekennzeichnet ,**
- **dass** die Bildauswerteeinheit (14) den Helligkeitswert jedes Pixels der Kamera (12) mit einem vorgebbaren Mindesthelligkeitswert vergleicht und ein Nebel anzeigendes Ausgangssignal ausgibt, wenn keines der Pixel einen Helligkeitswert aufweist, der kleiner als der Mindesthelligkeitswert ist.

2. Vorrichtung nach Anspruch 1, **gekennzeichnet durch** eine Einheit (16) zur Detektion der Intensität des Umgebungslichts, wobei der Mindesthelligkeitswert in Abhängigkeit von der Intensität des Umgebungslichts vorgebbar ist.

3. Vorrichtung nach Anspruch 2, **dadurch gekennzeichnet, dass** die Einheit (16) zur Detektion der Intensität des Umgebungslichts mindestens eine Fotodiode aufweist.

4. Vorrichtung nach Anspruch 2, **dadurch gekennzeichnet, dass** die Einheit (16) zur Detektion der Intensität des Umgebungslichts die Helligkeitswerte der Pixel der Kamera (12) empfängt und den höchsten Helligkeitswert für eine vorgebbare Zeitspanne als Intensität des Umgebungslichts speichert.

5. Vorrichtung nach Anspruch 4, **dadurch gekennzeichnet, dass** der höchste Helligkeitswert für eine vorgebbare Zeitspanne gespeichert bleibt und danach durch den größten Helligkeitswert der Pixel des dann aktuellen Kamerabildes überschrieben wird.

6. Vorrichtung nach Anspruch 4, **dadurch gekennzeichnet, dass** der gespeicherte Wert über eine vorgebbare Zeitspanne verringert wird und dann durch einen neuen Wert für die Intensität des Umgebungslichts überschrieben wird, wenn der größte Helligkeitswert der Pixel der Kamera (12) des jeweils aktuellen Bildes oder ein einen Durchschnittswert der Pixel der Kamera (12) des jeweils aktuellen Bildes repräsentierender Helligkeitswert größer ist als der gespeicherte Wert.

7. Vorrichtung nach einem der Ansprüche 1 bis 6, **dadurch gekennzeichnet, dass** vor der Kamera (12) eine transparente Fläche angeordnet ist, deren von der Kamera (12) erfasster Bereich von einer Lichtquelle mit für die Kamera (12) detektierbarer Strahlung ausleuchtbar ist.
